(19) **Europäisches Patentamt / European Patent Office / Office européen des brevets**

(11) **EP 2 492 706 A1**

(12) **EUROPEAN PATENT APPLICATION**

(43) Date of publication:
   **29.08.2012 Bulletin 2012/35**

(51) Int Cl.:
   **G01S 3/28** *(2006.01)*   **H01Q 21/20** *(2006.01)*

(21) Application number: **11155483.8**

(22) Date of filing: **22.02.2011**

<table>
<tr><td>(84) Designated Contracting States:<br><b>AL AT BE BG CH CY CZ DE DK EE ES FI FR GB<br>GR HR HU IE IS IT LI LT LU LV MC MK MT NL NO<br>PL PT RO RS SE SI SK SM TR</b><br>Designated Extension States:<br><b>BA ME</b><br><br>(71) Applicant: <b>THALES NEDERLAND B.V.<br>7550 GD Hengelo (NL)</b></td><td>(72) Inventor: <b>Laarhuis, Jan<br>7534 PA Enschede (NL)</b><br><br>(74) Representative: <b>Lucas, Laurent Jacques<br>Marks & Clerk France<br>Conseils en Propriété Industrielle<br>Immeuble Visium<br>22, Avenue Aristide Briand<br>94117 Arcueil Cedex (FR)</b></td></tr>
</table>

(54) **An apparatus for determining whether a kinematic report emitted by a co-operative sensor is bearing-spoofed or not**

(57)   There is disclosed an apparatus for determining whether a kinematic report emitted by a co-operative sensor is bearing-spoofed or not.

The apparatus comprises means for receiving and processing the report.

The apparatus comprises a directive antenna system having a 360-degrees bearing coverage and means for estimating the bearing from which the report has been received.

Application : command and control systems

FIG.1

EP 2 492 706 A1

**EP 2 492 706 A1**

**Description**

*Technical field :*

The present invention relates to an apparatus for determining whether a kinematic report emitted by a co-operative sensor is bearing-spoofed or not. For example, the invention is particularly applicable to command and control systems.

*Prior art and technical problem:*

The Automatic Identification System (AIS) is an automated system that enables localizing vessels by use of co-operative sensors. Co-operative sensors become more and more important in daily life and integration within navy systems is recommended for a number of reasons. A first reason is to benefit from the proliferation of AIS transponders on the large ships, over 300 tons, on which AIS is mandatory. However, it may also be anticipated that a lightweight version of AIS, which reports only the kinematics and which is easy to install, configure and operate, may proliferate on smaller ships as well in near future. A second reason is to benefit from the additional information that AIS messages convey.

As long as operators of AIS transponders act sincerely, AIS messages can be trusted. However, AIS messages can be manipulated intentionally or unintentionally by the operator. When operators have bad intentions, they may tweak the messages they send out in order to mislead receiving parties about their position and heading (kinematic spoofing) and/or about their cargo and destination (non-kinematic spoofing).

Although many message types have been defined for AIS, in this application we, explicitly or implicitly, assume the 'position report' message types, which deal with the kinematic properties.

When a spoofed position report is fed into a surveillance system, it may disturb its operation and negatively impact the performance of the fusion and track management processes. Possible effects are track flapping and lost tracks, but the reason for this behaviour cannot be discovered. To avoid such behaviour caused by co-operative sensors, spoofed reports must be detected and prevented from entering the fusion process. Besides avoiding these negative effects, spoofed reports are valuable information in itself and occurrence of such should be reported to the command and control system.

An often heard method for AIS spoofing detection is based on measuring the received power of an AIS message, and then estimating the range assuming this message has been sent at well-defined power levels. From the propagation losses the range can be estimated. This method relies on a calibrated receiver and adherence to the prescribed power levels. For unintentional spoofing detection this method may be useful. But the tough cases undoubtedly are the intentional spoofings, for which this method falls short. After all, an adversary able to spoof its position will certainly be able to manipulate the power level of its AIS transmissions!

The patent application US 2009/0322586 A1 discloses methods and apparatus for using interferometry to prevent spoofing of Automatic Dependent Surveillance-Broadcast (ADS-B) targets, ADS-B being a cooperative surveillance technique for air traffic control. A major drawback of the apparatus described in that application is that it comprises two or more omni-directional antennae with sufficient geographical separation for interferometry processes, which use exclusively time differences and triangulation to determine the position of emission. Such a geographical separation cannot be achieved onboard a ship and is a radical departure from the present invention, which requires only one physical location. Indeed, the fact that the operational domain for ADS-B is the airspace enables large range separation between antennae receiving an ADS-B report.

*Summary of claims :*

The present invention aims to provide an apparatus which do not require geographical separation between antennae, thus enabling operation in a restricted area such as a ship. It provides a solution to kinematic spoofing detection based on bearing spoofing detection. Bearing spoofing detection entails measuring the direction of arrival of a received AIS message and comparing this measured direction with the direction corresponding to the reported position, so as to determine unambiguous bearing and thus detect spoofing of the bearing value. At its most general, the invention proposes an apparatus for determining whether a kinematic report emitted by a co-operative sensor is bearing-spoofed or not, the apparatus comprising means for receiving and processing the report. The apparatus comprises a directive antenna system having a 360-degrees bearing coverage and means for estimating the bearing from which the report has been received.

Advantageously, the directive antenna system may comprise a plurality of antennae arranged so as to provide the 360-degrees bearing coverage.

Advantageously, the means for estimating the bearing from which the report has been received may include means for deducing the bearing from the ratio of power received by each of the antennae.

Preferably, the means for estimating the bearing from which the report has been received may include means for calculating the bearing corresponding to the position reported.

Preferably, the means for estimating the bearing from which the report has been received may comprise means for generating a spoofing notification if the bearing corresponding to the position reported deviates beyond a given threshold from the bearing deduced from the ratio of power received by each of the antennae.

Preferably, the means for deducing the bearing may include means for deducing the ratio of the two strongest voltages among the voltages provided as output of each of the antennae.

Preferably, the ratio of the two strongest voltages may be deduced by normalizing said two strongest voltages, so as to compensate for differences in calibration among the two antennae providing said two strongest voltages.

For example, the report may be an AIS report.

For example, the antennae may have a cardioid radiation pattern.

It is important understanding that the bearing of receive is unambiguously coupled to the bearing of transmission within the propagation time of the report.

### Advantages :

Thus an advantage provided by the present invention is that it provides, unlike existing radio direction finders based on omni-directional antennae, a cheap solution for kinematic spoofing detection. In particular, it is based on existing transponders and its antenna system can be built at a low cost, by use of a simple loop and a monopole, both made of conductive wire. Moreover, its tuning requires only passive components.

### Drawings:

Non-limiting examples of the invention are described below with reference to the accompanying drawings in which :

- figure 1, schematically illustrates an exemplary embodiment of the present invention;
- figure 2, graphically illustrates exemplary cardioids radiation patterns of three antennae which are suitable for embodying the present invention;
- figure 3, graphically illustrates the resolution of ambiguity of bearing location with inverse sine and cosine according to the present invention;
- figure 4, graphically illustrates the resolution of ambiguity of bearing location with respect to the principle axis of the antenna according to the present invention.

In the figures, like reference signs are assigned to like items.

### Description of invention referring to figures :

The present invention proposes using a constellation of three directional antennae within a same system node and utilizing the ratio of received powers at these antennae for determination of unambiguous bearing of a received AIS message. The estimated bearing is then compared with correspondingly reported information in the message. Afterwards, it is decided whether or not there is kinematic spoofing. In case of spoofing, access to fusion is denied to the spoofed report and a spoofing notification may be transmitted to a control and command system.

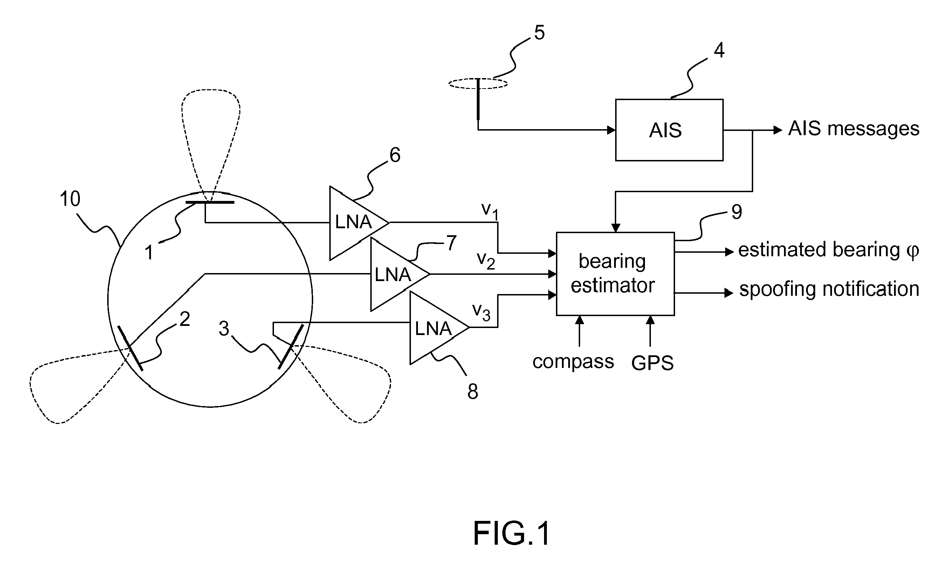

The Figure 1 illustrates an exemplary embodiment of the present invention. It may comprise a directive antenna system 10, which includes three antennae 1, 2 and 3 having each a substantially 120 degrees half-power beam width, as illustrated by their respective radiation patterns in dashed lines on Figure 1. The antennae 1, 2 and 3 are arranged with a 120 degrees spacing, for example around a cylindrical module. It is worth noting that such a directive antenna architecture is particularly advantageous when it is impossible to use a centrally positioned monopole antenna, because of mechanical constraints for example. The antennae 1, 2 and 3 are tuned electronically to the AIS-band, that is to say 169 megahertz (MHz) substantially. Each of the three antennae has its own processing to base band.

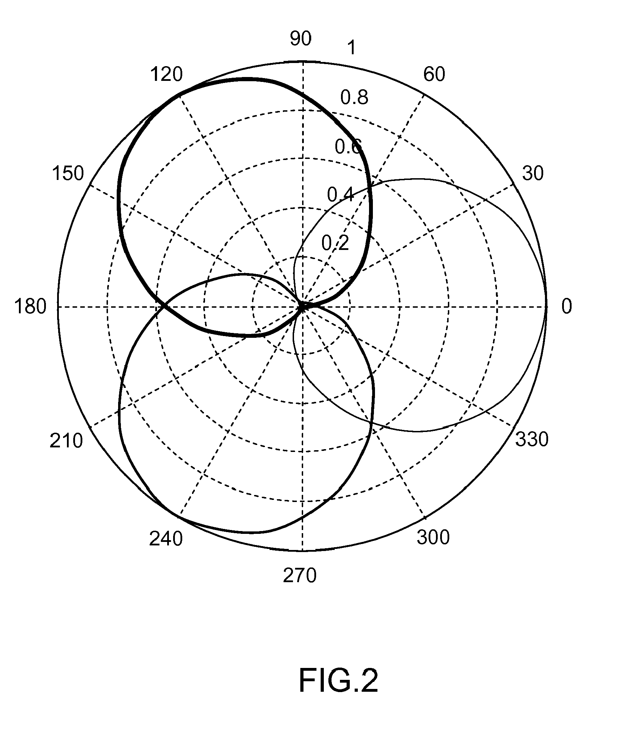

As illustrated by Figure 2, the antennae 1, 2 and 3 may have a cardioid radiation pattern, governed by the expression $(1+\cos(\varphi))$ for example, where $\varphi$ designates the bearing varying from 0 to 360 degrees. The invention is, however, not limited by the use of cardioids patterns, nor by the number of antennae.

The voltages provided as output of the three antennae 1, 2 and 3 are advantageously used to determine the Direction of Arrival of AIS messages ($DoA_m$) as well as to determine the Time of Arrival of AIS messages ($ToA_m$), where the subscript 'm' refers to 'measured'.

Then spoofing detection is performed by first calculating the Direction Of Arrival corresponding to the position

report ($DOA_r$), where the subscript 'r' refers to 'reported'. Such calculation is well-known from the prior art. If $DOA_m$ deviates significantly from $DOA_r$, then a bearing-spoofing notification may be generated and send to the command and control system. Only spoofing-free AIS reports are indicated as genuine and are passed to further processing in the system, usually the fusion process.

The exemplary embodiment of Figure 1 comprises an AIS receiver 4, which is connected to a monopole antenna 5 with omnidirectional radiation pattern, as sketched in the figure 1. It is worth noting that any existing commercial AIS receiver is suitable. It is also worth noting that, as all existing AIS systems, the AIS receiver 4 and its monopole antenna 5 do not enable bearing measurement. Advantageously, a system separate from the receiver 4 may be used for the estimation of the bearings from which the AIS messages have been transmitted. Said system comprises the previously described directive antenna system 10 including the three 120-degrees cardioids antennae 1, 2 and 3, each coupled to a low noise amplifier (LNA) 6, 7 and 8, respectively. The LNAs 6, 7 and 8 bring the signals to baseband. Said system comprises also a bearing estimator 9, which successively performs several operations. An operation includes monitoring AIS transmissions and time-stamping them. This requires reference time, which may preferably be provided by a Global Positioning System (GPS). Another operation includes calculating the relative 'estimated bearing' of transmission by manipulating the strengths of signal at the three antennae 1, 2 and 3. Derivation of the bearing estimation is detailed below. Another operation includes calculating the absolute bearing by correcting for system orientation with regard to northerly, which may preferably be provided by a compass. Another operation includes calculating the 'reported bearing' from the reported position and own position. Another operation includes determining whether or not there is kinematic spoofing of the transmitted AIS report. The latter operation is performed by correlating $ToA_m$ to the reported transmission time, correlating the estimated bearing with the reported bearing and generating a 'spoofing notification' in case of spoofing.

In another embodiment, the antenna 5 may be skipped by feeding the RF input of the AIS receiver 4 with the combined outputs of the LNAs 6, 7 and 8. However, this involves the use of an additional combiner module.

Conditions for acceptable spoofing detection performance include sufficient accuracy in bearing estimation. Another condition is sufficient synchronization in the clocks of the senders and the receiver, which is achieved because they all use GPS as the source for their time. Yet another condition is absence of reception via indirect transmission paths, which is almost always true in a naval environment.

In the following, the mathematical derivation of the bearing $\varphi$ is given for the unambiguous bearing angle of an emitter given the voltages $v_1$, $v_2$ and $v_3$ provided as output of the three directional antennae 1, 2 and 3, respectively. The symmetry of the directional pattern among its maximum causes ambiguity. For a given strength of the pattern, the angle can be at both sides of the maximum strength.

The following derivation shows that only two of the three voltages are sufficient to solve the ambiguity in the angle. Therefore the smallest voltage will not be taken into account in the calculation. Assume that $v_i$ and $v_j$ ($i$, j $\in$ {1,2,3}) are the two strongest antenna voltages. It should be noted that only the ratio of the two strongest voltages can be used as the key information to determining the bearing of the emission. In this case the real bearing of emission is within the main axes of the corresponding antennas, i.e. known with a precision of the size of the angular segment of 120 degrees.

The following normalization of the antenna signal is applied, so as to compensate for differences in calibration among the antennae:

$$v_i(\varphi - \psi_i) = v_0(1 + \cos(\varphi - \psi_i)^2 \quad \Rightarrow \quad \cos(\varphi - \psi_i) = 2 \cdot \sqrt{\frac{v_i(\varphi - \psi_i)}{4 \cdot v_0}} - 1 \quad (1)$$

$$a_i \equiv \sqrt{\frac{v_i(\varphi - \psi_i)}{4 \cdot v_0}}$$

where $a_i$ is the normalized voltage from antenna $i$, whose value is between 0 and 1, and $\psi_i$ is the offset angle of the $i$[th] antenna. In the case of the present preferred embodiment, the values for $\psi_i$ are ($i$-1)$\times$120 degrees. $v_0$ is the amplitude of the antenna signal before normalization.

Manipulating Equation (1) for antenna $i$ and $j$ and eliminating the sine term results in:

$$\cos(\varphi - \psi_i) = 2a_i - 1 = \cos\varphi \cdot \cos\psi_i + \sin\varphi \cdot \sin\psi_i \quad \left| \cdot \frac{1}{\sin\psi_i} \right. \quad (2)$$

$$\cos(\varphi - \psi_j) = 2a_j - 1 = \cos\varphi \cdot \cos\psi_j + \sin\varphi \cdot \sin\psi_j \quad \left| \cdot \frac{1}{\sin\psi_j} \right. \quad (3)$$

Rewriting Equations (2) and (3) we get:

$$2a_i = 1 + \cos\varphi \cdot \cos\psi_i + \sin\varphi \cdot \sin\psi_i \qquad (4)$$

$$2a_j = 1 + \cos\varphi \cdot \cos\psi_j + \sin\varphi \cdot \sin\psi_j \qquad (5)$$

Divide (4) by (5) and substitute $c_{ij}$ for $\dfrac{2a_i}{2a_j}$

$$c_{ij} = \frac{1 + \cos\varphi \cdot \cos\psi_i + \sin\varphi \cdot \sin\psi_i}{1 + \cos\varphi \cdot \cos\psi_j + \sin\varphi \cdot \sin\psi_j} \qquad \Rightarrow$$

$$\left(\cos\psi_i - c_{ij}\cos\psi_j\right)\cos\varphi + \left(\sin\psi_i - c_{ij}\sin\psi_j\right)\sin\varphi + \left(1 - c_{ij}\right) = 0 \quad (6)$$

Equation (6) can be written as p.cosφ+q.sinφ+r=0. With the substitution sinφ=(1-cos2φ)$^{1/2}$ and some manipulation, a quadratic formula results:

$$\left(p^2 + q^2\right) \cdot x^2 + 2pr \cdot x + \left(r^2 - q^2\right) = 0 \qquad (7)$$

Where x = cosφ. Equation (7) has two solutions, which can be found using the well-known abc-formula:

$$x = \frac{-2pr \pm \sqrt{4p^2r^2 - 4\left(p^2 + q^2\right) \cdot \left(r^2 - q^2\right)}}{2\left(p^2 + q^2\right)}$$
$$= \frac{-pr \pm \sqrt{p^2r^2 - \left(p^2 + q^2\right) \cdot \left(r^2 - q^2\right)}}{\left(p^2 + q^2\right)} \qquad (8)$$

$$p = \left(\cos\psi_i - c_{ij}\cos\psi_j\right) \qquad (9)$$

$$q = \left( \sin \psi_i - c_{ij} \sin \psi_j \right) \qquad (10)$$

$$r = 1 - c_{ij} \qquad (11)$$

A similar expression in $\sin\varphi$ can be derived. This additional expression is derived from Equation (6) and reads:

$$\left( p^2 + q^2 \right) \cdot y^2 + 2qr \cdot y + \left( r^2 - p^2 \right) = 0 \qquad (12)$$

where y =$\sin\varphi$. Equation (12) also has two solutions:

$$y = \frac{-qr \pm \sqrt{q^2 r^2 - \left( p^2 + q^2 \right) \cdot \left( r^2 - p^2 \right)}}{\left( p^2 + q^2 \right)} \qquad (13)$$

We now have four solutions, and each of these four solutions has an ambiguity due to the fact that we have to take the inverse cosine (*acos*) or inverse sine (*asin*) of these solutions. There are three steps needed to remove the ambiguity of the solution.

The first step includes determining which y belongs to which *x*. The result is two pairs $(x_1, y_1)$ and $(x_2, y_2)$.

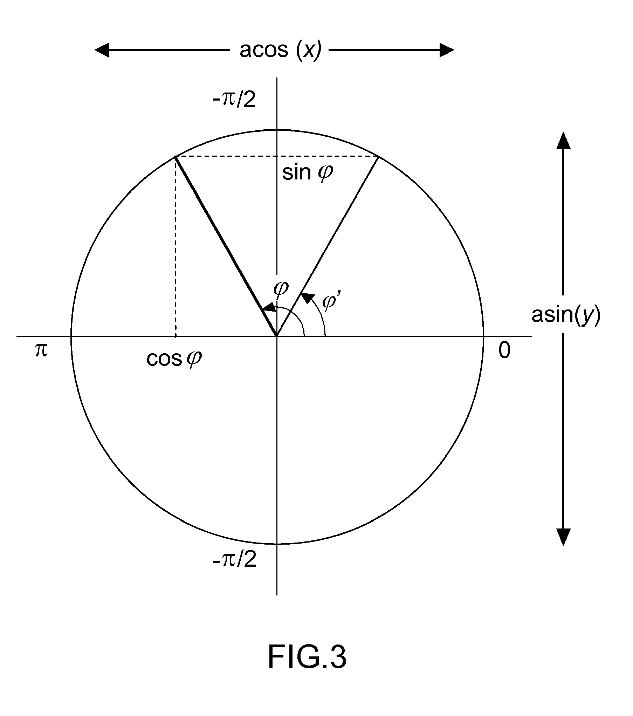

The second step includes determining for each of these pairs in which quadrant the solution is. This results in the correct angles $\varphi_x$ and $\varphi_y$ corresponding to the ambiguity that arises from the definition of the inverse sine and inverse cosine. While they both have a domain of [-1,1], the range of the former is $[-\pi/2, \pi/2]$ and the range of the latter is $[0,\pi]$. This is shown in Figure 3. Suppose we have an argument *x* for *acos* and an argument *y* for *asin,* and the corresponding real angle is $\varphi$ as shown in Figure 3. The *asin* expression yields $\varphi'$ and the *acos* expression yields $\varphi$. Since $\varphi'>0$, we know that the real corresponding angle is within $[0,\pi]$. Were $\varphi'<0$, then the real angle would be within $[-\pi,0]$. Likewise, because $\varphi>\pi/2$, the real value is within $[\pi/2,3\pi/2]$. Were $\varphi<\pi/2$, then the real angle would be within $[-\pi/2, \pi/2]$. Using these conditions, the correct angle can be found.

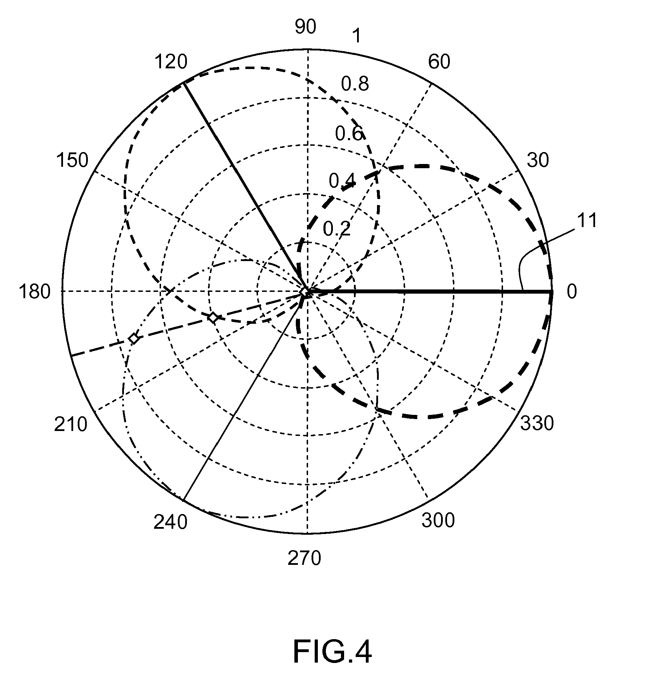

The third step includes using the angular segment determined by the strongest signals to select the right solution from $\varphi_x$ and $\varphi_y$. In Figure 4, the line referenced 11 represents the real bearing.

It is worth noting that the present invention is applicable to other cooperative sensors as well. For example, ADS-B support may be provided by adding elevation estimation to the bearing estimation in order to get a 3D angular estimation. The antenna system, however, becomes a lot more complex.

**Claims**

1. An apparatus for determining whether a kinematic report emitted by a cooperative sensor is bearing-spoofed or not, the apparatus comprising means (4) for receiving and processing the report, the apparatus being **characterized in that** it comprises:

   - a directive antenna system (10) having a 360-degrees bearing coverage;
   - means (9) for estimating the bearing from which the report has been received.

2. An apparatus according to Claim 1, **characterized in that** the directive antenna system (10) comprises a plurality of antennae (1, 2, 3) arranged so as to provide the 360-degrees bearing coverage.

3. An apparatus according to Claim 2, **characterized in that** the means (9) for estimating the bearing from which the report has been received include means for deducing the bearing from the ratio of power received by each of the antennae (1, 2, 3).

**4.** An apparatus according to Claim 3, **characterized in that** the means (9) for estimating the bearing from which the report has been received include means for calculating the bearing corresponding to the position reported.

**5.** An apparatus according to Claim 4, **characterized in that** the means (9) for estimating the bearing from which the report has been received comprise means for generating a spoofing notification if the bearing corresponding to the position reported deviates beyond a given threshold from the bearing deduced from the ratio of power received by each of the antennae (1, 2, 3).

**6.** An apparatus according to Claim 3, **characterized in that** the means for deducing the bearing include means for deducing the ratio of the two strongest voltages among the voltages ($v_1$, $v_2$, $v_3$) provided as output of each of the antennae (1, 2, 3).

**7.** An apparatus according to Claim 6, **characterized in that** the ratio of the two strongest voltages is deduced by normalizing said two strongest voltages, so as to compensate for differences in calibration among the two antennae providing said two strongest voltages.

**8.** An apparatus according to Claim 1, **characterized in that** the report is an AIS report.

**9.** An apparatus according to Claim 2, **characterized in that** the antennae have a cardioid radiation pattern (1, 2, 3).

FIG.1

FIG.2

FIG.3

FIG.4

Europäisches
Patentamt

European
Patent Office

Office européen
des brevets

# EUROPEAN SEARCH REPORT

**Application Number**

EP 11 15 5483

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2010/020573 A1 (THALES NEDERLAND BV [NL]; LAARHUIS JAN [NL]) 25 February 2010 (2010-02-25) * page 9, line 10 - page 11, line 34 * ----- | 1-9 | INV. G01S3/28 H01Q21/20 |
| Y | EP 1 912 077 A2 (ERA SYSTEMS CORP [US]) 16 April 2008 (2008-04-16) * paragraphs [0036], [0069] - [0072]; claim 1; figure 11 * ----- | 1-7,9 | |
| Y,D | US 2009/322586 A1 (LANZKRON PAUL J [US]) 31 December 2009 (2009-12-31) * the whole document * ----- | 1-7,9 | |
| Y | DE 103 36 124 A1 (PLATH GMBH [DE]) 10 March 2005 (2005-03-10) * paragraph [0011]; figures 1-3 * ----- | 1-9 | |
| | | | **TECHNICAL FIELDS SEARCHED (IPC)** G01S H01Q |

The present search report has been drawn up for all claims

| Place of search | Date of completion of the search | Examiner |
|---|---|---|
| Munich | 4 August 2011 | Kern, Olivier |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...................................................................................................

& : member of the same patent family, corresponding
    document

EPO FORM 1503 03.82 (P04C01)

EP 2 492 706 A1

## ANNEX TO THE EUROPEAN SEARCH REPORT
## ON EUROPEAN PATENT APPLICATION NO.

EP 11 15 5483

This annex lists the patent family members relating to the patent documents cited in the above-mentioned European search report.
The members are as contained in the European Patent Office EDP file on
The European Patent Office is in no way liable for these particulars which are merely given for the purpose of information.

04-08-2011

| Patent document cited in search report | | Publication date | Patent family member(s) | | Publication date |
|---|---|---|---|---|---|
| WO 2010020573 | A1 | 25-02-2010 | EP<br>NL | 2329291 A1<br>1035845 C | 08-06-2011<br>10-03-2010 |
| EP 1912077 | A2 | 16-04-2008 | NONE | | |
| US 2009322586 | A1 | 31-12-2009 | EP<br>WO | 2165212 A2<br>2009025908 A2 | 24-03-2010<br>26-02-2009 |
| DE 10336124 | A1 | 10-03-2005 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20090322586 A1